# FASCICULE DE BREVET EUROPEEN

(11) **EP 2 370 702 B1**
(45) Date de publication et mention de la délivrance du brevet: **15.05.2013**
(21) Numéro de dépôt: 09803792.2
(22) Date de dépôt: 18.12.2009
(51) Int. Cl.: F16C 7/02, B23K 20/12, C22C 47/00

(54) **PROCEDE DE FABRICATION D'UNE BIELLE EN METAL, RENFORCEE PAR DES FIBRES LONGUES**
VERFAHREN ZUR HERSTELLUNG EINER MIT LANGEN FASERN VERSTÄRKTEN METALLVERBINDUNGSSTANGE
METHOD FOR MAKING A METAL CONNECTING ROD REINFORCED WITH LONG FIBRES

(30) Priorité: 24.12.2008 FR 0807451
(43) Date de publication de la demande: 05.10.2011
(73) Titulaire: Messier-Bugatti-Dowty, 78140 Velizy Villacoublay (FR)
(72) Inventeur: MASSON, Richard, F-78530 Buc (FR); DUNLEAVY, Patrick, F-91120 Palaiseau (FR)
(74) Mandataire: Parzy, Benjamin Alain
(86) Numéro de dépôt international: PCT/FR2009/001452
(87) Numéro de publication internationale: WO 2010/072915

(56) Documents cités:
- DE-A1- 19 941 693
- FR-A- 2 502 036
- JP-A- 58 094 620
- JP-A- 62 098 016
- JP-A- 63 282 223

## Description

La présente invention concerne un procédé de fabrication d'une bielle en métal, renforcée par des fibres longues.

Un tel procédé est connu du document JP 63282223 A.

### ARRIERE-PLAN TECHNOLOGIQUE

Il est connu de renforcer le corps d'une bielle par des fibres longues s'étendant selon l'axe du corps. Par exemple, on connaît du document FR 2502036 une bielle dont le corps comporte un coeur en fibres longues. Les fibres sont regroupées pour former un faisceau qui est soumis à une diffusion de cuivre. Le faisceau de fibres ainsi rigidifié est ensuite intégré dans un moule pour former l'âme centrale d'une bielle moulée, par exemple en aluminium. Un tel renforcement est très performant, car s'étendant dans l'axe de sollicitation du corps de bielle.

A l'opposé, l'intégration de fibres longues dans ou autour des embouts de la bielle est techniquement plus difficile, et ne se révèle pas aussi efficace que le renforcement du corps, dans la mesure où dans ces embouts, certaines fibres longues ainsi intégrées subissent des efforts perpendiculaires à leur allongement.

Ainsi, dans le document précité, les embouts de la bielle restent uniquement métalliques, et ne bénéficient pas du renfort des fibres longues. Les embouts sont ainsi réalisés dans un matériau homogène adapté à la sollicitation subies les extrémités et aux déformations induites par celles-ci.

### OBJET DE L'INVENTION

L'invention a pour objet un procédé de fabrication d'une bielle à corps renforcé de fibres longues, permettant une certaine continuité, entre le corps et les embouts de la bielle.

### BREVE DESCRIPTION DE L'INVENTION

L'invention a pour objet un procédé de fabrication d'une bielle comportant les étapes de :
- fabriquer un corps en matériau métallique renforcé par des fibres longues orientées principalement selon un axe longitudinal du corps ;
- fabriquer un embout dans un matériau métallique renforcé par des fibres courtes ;
- souder l'embout à l'extrémité du corps selon la technique du soudage par friction-malaxage.

Les fibres longues sont particulièrement intéressantes pour le renforcement du corps, tandis que les fibres courtes permettent un renforcement significatif de l'embout, tout en conservant un caractère globalement homogène de la matière constituante. La technique de soudage préconisée, connue également sous le nom de soudage tixotropique ou « friction stir welding » permet une liaison intime entre le corps et l'embout, en créant un passage progressif d'une zone à fibres courtes vers une zone à fibres longues.

Grâce aux dispositions de l'invention, il est ainsi possible de former une bielle renforcée dans toutes ses parties, en utilisant des fibres de longueur adaptées à chacune des zones de la bielle, et présentant une continuité entre les zones.

### BREVE DESCRIPTION DES FIGURES

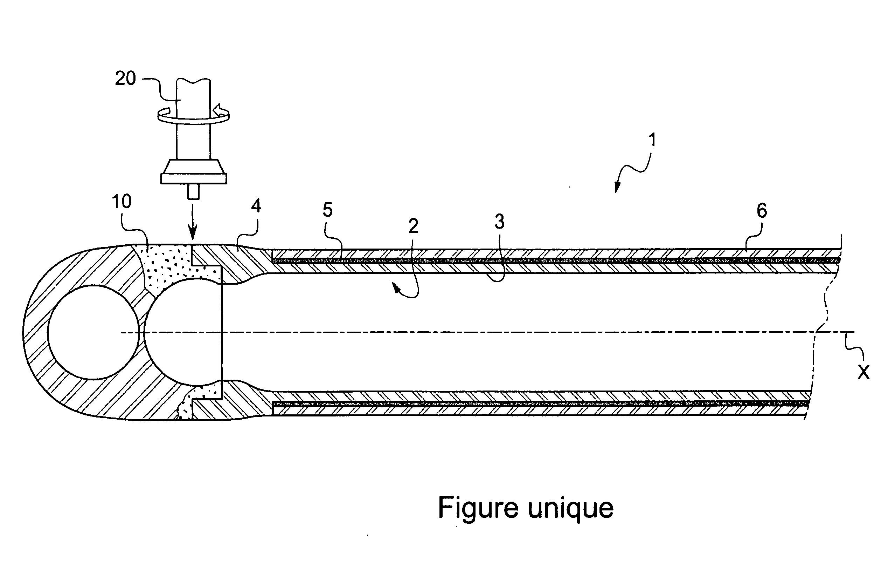

L'invention sera mieux comprise à la lumière de la description qui suit l'unique figure qui est une vue en coupe schématique d'une bielle selon un mode particulier de mise en oeuvre de l'invention, représentée en cours de fabrication.

### DESCRIPTION DETAILLEE DE L'INVENTION

En référence à la figure, la bielle comporte un corps 1, dont on voit ici une partie courante. Le corps comporte un manchon 2 réalisé ici en aluminium à haute résistance. Le manchon 2 comporte une partie courante 3 cylindrique qui se termine par une collerette 4. Sur la face externe de la partie courante 3 ont été disposées une nappe de fibres longues 5, ici des fibres en carbure de silicium, s'étendant parallèlement à un axe longitudinal X du corps. De préférence, le manchon 2 est moulé et les fibres longues 5 sont insérées dans le moule, ce qui permet une infiltration du métal entre les fibres, assurant ainsi une grande cohésion entre le manchon 2 et les fibres longues 5. On pourra également utiliser des fibres céramiques enrobées d'une gaine métallique placées en nappe autour d'une ébauche cylindrique ou conique, le tout étant soumis à un compactage à chaud. D'autres procédés de cohésion entre les fibres et le manchon pourront être mis en oeuvre, comme par exemple le collage ou l'utilisation de résines synthétiques.

Ici, les fibres longues 5 sont recouvertes d'un couvercle 6 cylindrique, protégeant les fibres. On remarquera que les fibres longues s'étendent jusqu'à proximité de la collerette 4.

On fabrique par ailleurs un embout 10, ici un embout en forme d'oeillet, en aluminium renforcé de fibres courtes, par exemple des fibres de carbure de silicium. L'embout comporte une collerette 11 complémentaire de la collerette 4 du corps 1. On a symboliquement représenté la présence de fibres courtes dans la matière de l'embout 10 sur la figure.

L'embout 10 est rapporté sur le corps, et les deux éléments sont soudés entre eux, au niveau de l'interface entre les collerettes, par la technique du soudage par friction-malaxage. Il est rappelé que cette technique fait appel à un outil spécifique 20 qui est mis en rotation rapide et vient frotter sur les deux éléments à assembler. La friction de l'outil sur les éléments provoque un ramollissement de la matière qui entre dans une phase pâteuse. L'outil pénètre alors dans le plan de joint, à l'interface entre les pièces à souder et mélange intimement les matières des deux éléments par une opération combinée de forgeage et d'extrusion du métal.

Un tel soudage provoque un mélange local du matériau de l'embout 10 dans le matériau du manchon 2, de sorte que les fibres courtes de renfort présentes dans le matériau de l'embout 10 diffusent localement vers le matériau du manchon 2, assurant ainsi une continuité entre les deux éléments.

Il reste bien sûr à assembler l'autre embout à l'autre extrémité du manchon, selon le même mode opératoire.

On obtient ainsi une bielle dont le corps est renforcé par des fibres longues, et les embouts par des fibres courtes, avec un passage progressif des zones à fibres courtes et des zones à fibres longues.

L'invention n'est pas limitée à ce qui vient d'être décrit mais englobe au contraire toute variante entrant dans le cadre défini par les revendications.

En particulier, bien que les métaux mentionnés ici sont des aluminiums à haute résistance, par exemple de la série 7000, l'invention s'applique à un corps et des embouts réalisés dans d'autres matériaux métalliques, comme du titane ou du magnésium.

Le matériau métallique du manchon peut lui-même contenir des fibres courtes compatibles avec les fibres courtes de l'embout.

Enfin, bien que l'on ait indiqué que le corps de la bielle était fabriqué entièrement avant le soudage des embouts, ces derniers peuvent être soudés au manchon, avant que celui-ci ne reçoive un renfort de fibres longues.

## Revendications

1. Procédé de fabrication d'une bielle, comportant les étapes de :
- fabriquer un corps (1) en matériau métallique renforcé par des fibres longues (5) orientées principalement selon un axe longitudinal (X) du corps ;
- fabriquer un embout (10) dans un matériau métallique renforcé par des fibres courtes ; **caractérisé en ce que**
- l'embout est soudé à l'extrémité du corps selon la technique du soudage par friction-malaxage.

2. Procédé selon la revendication 1, dans lequel le corps comporte un manchon (2) terminé par une collerette (4), et comportant une partie courante cylindrique (3) portant les fibres longues (5).

3. Procédé selon la revendication 2, dans lequel la partie courante (3) du manchon (2) est recouverte par un couvercle cylindrique (6).

4. Procédé selon l'une des revendications précédentes, dans lequel le matériau métallique du corps (1) est de l'aluminium, les fibres longues étant en carbure de silicium.

5. Procédé selon l'une des revendications précédentes, dans lequel le matériau métallique de l'embout (10) est de l'aluminium, les fibres courtes étant en carbure de silicium.

## Patentansprüche

1. Verfahren zur Herstellung einer Kurbelstange, umfassend die folgenden Schritte:
- Herstellen eines Körpers (1) aus Metallwerkstoff, der durch lange Fasern (5) verstärkt ist, die hauptsächlich in Richtung einer Längsachse (X) des Körpers gerichtet sind;
- Herstellen eines Ansatzstückes (10) aus Metallwerkstoff, der durch kurze Fasern verstärkt ist; **dadurch gekennzeichnet, dass**
das Ansatzstück an das Ende des Körpers durch Reibrührschweißen geschweißt ist.

2. Verfahren nach Anspruch 1, bei dem der Körper eine Hülse (2), die durch einen Bund (4) abgeschlossen ist und einen gängigen zylindrischen Abschnitt (3) umfasst, der die langen Fasern trägt.

3. Verfahren nach Anspruch 2, bei dem der gängige Abschnitt (3) der Hülse (2) mit einer zylindrischen Abdeckung (6) bedeckt ist.

4. Verfahren nach einem der vorhergehenden Ansprüche, bei dem der Metallwerkstoff des Körpers (1) aus Aluminium ist, wobei die langen Fasern aus Siliciumcarbid bestehen.

5. Verfahren nach einem der vorhergehenden Ansprüche, bei dem der Metallwerkstoff des Ansatzstücks (10) aus Aluminium ist, wobei die kurzen Fasern aus Siliciumcarbid bestehen.

## Claims

1. A method of fabricating a connecting rod, the method comprising the steps of:
• fabricating a body (1) of metallic material reinforced by long fibers (5) oriented mainly along a longitudinal axis (X) of the body;
• fabricating an endpiece out of a metallic material reinforced by short fibers; and
• **characterized in that** the endpiece is welded to the end of the body using a friction-mixing welding technique.

2. A method according to claim 1, wherein the body comprises a sleeve (2) terminated by a collar (4), and further comprises a cylindrical main portion (3) carrying the long fibers (5).

3. A method according to claim 2, wherein the main portion (3) of the sleeve (2) is covered by a cylindrical cover (6).

4. A method according to any preceding claim, wherein a metallic material of the body is aluminum, the long fibers being of silicon carbide.

5. A method according to any preceding claim, wherein the metallic material of the endpiece is aluminum, the short fibers being of silicon carbide.
